# EUROPÄISCHE PATENTSCHRIFT

(11) **EP 3 071 313 B1**
(45) Veröffentlichungstag und Bekanntmachung des Hinweises auf die Patenterteilung: **08.04.2020**
(21) Anmeldenummer: 14805515.5
(22) Anmeldetag: 20.11.2014
(51) Int. Cl.: B01D 46/10, B01D 46/52

(54) **FILTERELEMENT MIT FILTERBALG**
FILTER ELEMENT HAVING FILTER BELLOWS
ÉLÉMENT FILTRANT PRÉSENTANT UN SOUFFLET FILTRANT

(30) Priorität: 20.11.2013 DE 102013019327
(43) Veröffentlichungstag der Anmeldung: 28.09.2016
(73) Patentinhaber: Mann+Hummel GmbH, 71636 Ludwigsburg (DE)
(72) Erfinder: HASENFRATZ, Robert, 74523 Schwäbisch Hall (DE); PFLÜGER, Frank, 74343 Sachsenheim (DE); RÖSGEN, André, 73630 Remshalden (DE); WAGNER, Fabian, 71696 Möglingen (DE); THALMANN, Christian, 67346 Speyer (DE); SCHMID, Daniel, 74343 Sachsenheim (DE); DIRNBERGER, Timo, 71672 Marbach (DE)
(74) Vertreter: Seyboth, Matthias
(86) Internationale Anmeldenummer: PCT/EP2014/075086
(87) Internationale Veröffentlichungsnummer: WO 2015/075104

(56) Entgegenhaltungen:
- WO-A1-2009/015684
- DE-A1- 3 622 955
- DE-A1- 4 238 735
- DE-A1- 10 019 786

## Beschreibung

### Technisches Gebiet

Die Erfindung betrifft ein Filterelement zum Filtern eines Fluids mit einem Filterbalg aus einem zickzackförmig gefalteten Filtermedium, insbesondere zur Verwendung als Flachluftfilter einer Brennkraftmaschine, insbesondere eines Kraftfahrzeugs.

### Stand der Technik

Stirnfalten sind die beiden äußeren Falten, an gegenüberliegenden Stirnseiten des Filterbalgs eines Filterelements. Stirnränder sind die beiden freien Ränder des Filtermediums aus dem der Filterbalg gebildet wird, welche entlang der Stirnfalten verlaufen und diese an den Stirnseiten des Filterbalgs begrenzen. Stirnkanten des Filterbalgs sind die beiden anderen freien Ränder des Filterbalgs, die sich zwischen den Stirnrändern erstrecken und entsprechend der Faltung des Filterbalgs verlaufen. Die Faltkanten sind die Kanten, entlang denen das Filtermedium gefaltet ist. Bei einem vom Markt her bekannten zickzackförmig gefalteten, etwa quaderförmigen Filterbalg sind die Stirnränder und die Faltkanten in der Regel gerade und verlaufen parallel zueinander. Die Stirnkanten verlaufen von der Seite auf den Filterbalg betrachtet zickzackförmig und senkrecht zu den Stirnrändern und den Faltkanten. Vor dem Falten des Filtermediums verlaufen die Stirnkanten des später eine etwa quaderförmige gedachte Umhüllende aufweisenden Filterbalgs gerade und parallel zueinander. Die gedachte Umhüllende wird durch die Stirnkanten, die auf einer Reinfluidseite des Filterbalgs benachbarten Faltkanten bzw. Stirnränder und die auf einer Rohfluidseite benachbarten Faltkanten bzw. Stirnränder aufgespannt.

Bei Filterbälgen von Flachfilterelementen sind die Filtermedien nicht geschlossen, d.h., die Stirnfalten sind ebenso wie die Stirnkanten nicht miteinander verbunden. Im Unterschied dazu sind bei Filterbälgen von Rundfilterelementen die Filtermedien geschlossen, d.h., ihre Stirnfalten sind miteinander verbunden. Filterbälge von Flachfilterelementen können dabei eben sein, aber auch Biegungen in unterschiedliche Richtungen aufweisen.

Aus WO2009015684A1 ist ein Filtereinsatz für einen Luftfilter bekannt, welcher einen Faltenbalg aus zickzackförmig gefaltetem Filtermaterial umfasst, der an eine beliebige Form anpassbar ist. Der Faltenbalg bildet eine Vielzahl benachbarter Taschen, wobei zwischen den Taschen erste Falze am Scheitel der Taschen gebildet sind. Mittels einer zusätzlichen Faltung quer zu einer Längsrichtung der Taschen sind zweite Falze ausgebildet. Die vordere und hintere Stirnseite des Faltenbalgs werden durch quer zur Längsrichtung der Taschen verlaufende Schnitte zur Ablängung des Faltenbalgs gebildet.

DE3622955A1 beschreibt ein Verfahren zur Herstellung eines Luftfilters aus einer zickzackförmig gefalteten Papierbahn. Hierbei wird die Papierbahn vor dem Faltvorgang mit mindestens einer, abweichend von den Seitenkanten der Papierbahn verlaufenden Trennlinie versehen, längs der der Klebstoff zum Zusammenhalten der Falten der Papierbahn aufgetragen wird. Nach dem Falten und Verkleben wird der außerhalb der Trennlinie liegende Bereich der gefalteten Papierbahn abgetrennt. Die so gebildeten Stirnkanten liegen somit an einer von einer Ebene abweichenden gekrümmten Fläche, längs der eine Dichtung anschäumbar ist.

### Offenbarung der Erfindung

Eine Aufgabe der Erfindung ist es daher, ein Filterelement zum Filtern eines Fluids zu schaffen, das es erlaubt, flexible Bauräume, insbesondere in Kraftfahrzeugen, auszunutzen.

Die vorgenannte Aufgabe wird nach einem Aspekt der Erfindung gelöst von einem Filterelement mit einem Filterbalg, der wenigstens einen ersten Elementabschnitt und einen zweiten Elementabschnitt umfasst, die jeweils auf gegenüberliegenden Stirnseiten im Wesentlichen parallel zueinander verlaufende Stirnkantenflächen aufweisen, wobei von einem Elementabschnitt zum anderen Elementabschnitt die Stirnkantenflächen eine Richtungsänderung erfahren und wobei die Richtungsänderung der Stirnkantenflächen einen stumpfen Winkel aufweist und die Faltenkanten parallel weitergeführt sind, während die Stirnkantenflächen unter einem Winkel abknicken und im Wesentlichen parallel zueinander weiterlaufen.

Günstige Ausgestaltungen und Vorteile der Erfindung ergeben sich aus den weiteren Ansprüchen, der Beschreibung und der Zeichnung.

Es wird ein Filterelement zum Filtern eines Fluids, insbesondere einer Brennkraftmaschine, insbesondere eines Kraftfahrzeugs, vorgeschlagen, mit einem Filterbalg aus einem Filtermedium, das entlang von Faltkanten zickzackförmig zu Falten gefaltet ist, die sich jeweils zwischen gegenüberliegenden Stirnkanten des Filterbalgs erstrecken, wobei die Falten seitens der Stirnkanten jeweils, insbesondere mittels zumindest einer Dichtmittelspur oder einem Seitenband, seitlich abgedichtet sind. Dabei umfasst der Filterbalg wenigstens einen ersten Elementabschnitt und einen zweiten Elementabschnitt, die jeweils auf gegenüberliegenden Stirnseiten im Wesentlichen parallel zueinander verlaufende Stirnkantenflächen aufweisen, wobei die Stirnkantenflächen von einem Elementabschnitt zum anderen Elementabschnitt eine Richtungsänderung erfahren.

Insbesondere handelt es sich bei dem Filterbalg mit dem ersten und zweiten Elementabschnitt um einen einzelnen Filterbalg und nicht um einen zusammengesetzten Filterbalg, d. h. der einzelne Filterbalg ist aus einer zusammenhängenden Filtermediumbahn gefertigt.

Im Wesentlichen parallel zueinander verlaufende Stirnkantenflächen bedeutet, dass die Stirnkantenflächen unter einem Winkel zueinander verlaufen, der wenigstens kleiner als 5° ist, insbesondere aber nahezu 0° ist.

Das Filtersystem mit dem erfindungsgemäßen Filterelement erlaubt eine günstige Ausnutzung des verfügbaren Bauraums beim Verbau des Filtersystems, der gerade im Kraftfahrzeugbereich knapp bemessen ist. Bei gleich komplexem Einbauraum gelingt hierdurch eine Steigerung der Kapazität des Filterelements. In Verbindung mit Einspannen des Filterelementes in einen Rahmen kann das Filterelement in nahezu jegliche erdenkliche 3D-Geometrie gebracht werden.

Vorteile der erfindungsgemäßen Lösung eines Filterelements mit einem zickzackförmig gefalteten Filtermedium zum Filtern eines Fluids, insbesondere einer Brennkraftmaschine, insbesondere eines Kraftfahrzeugs, ergeben sich durch eine bessere Bauraumausnutzung des Filterelements. Aufgrund von Bauraumanforderungen in Kraftfahrzeugen ergeben sich diverse Außengeometrien eines Filterelements wie dreieck-, trapez-, doppeltrapezförmige Gestalt, die für einen Einsatz im Motor- oder Innenraum eines Kraftfahrzeugs günstig sind. Der Vorteil der erfindungsgemäßen Lösung ist, dass dabei nicht ein im Wesentlichen rechteckförmiger Filterbalg durch einen Beschnitt in die gewünschte Form gebracht wird, oder dass ein Filterelement aus mehreren Teilelementen zusammengesetzt werden muss. Auch zeichnen sich bisher bekannte Beschnittgeometrien dadurch aus, dass diese entlang der Stirnkante verlaufen und einen Schnittwinkel größer gleich 180° aufweisen. Das erfindungsgemäße Filterelement erlaubt wesentlich größere Gestaltfreiheiten und Flexibilitäten im Einbau in komplexe Bauräume. Das Filterelement kann so verschiedene Elementabschnitte umfassen, die gegeneinander unabhängige Richtungsänderungen der Stirnkantenflächen erlauben. Auch lassen sich dadurch Hinterschnitte im Filterbalg darstellen. Diese Richtungsänderungen müssen auch nicht unbedingt nur ebene Stirnkantenflächen umfassen, sondern können auch auf gekrümmte Stirnkantenflächen ausgedehnt sein. Dies ist besonders von Vorteil, da so neben der flexiblen Bauraumgestaltung eine einteilige Herstellung des Filterelements ermöglicht wird und außerdem die Gehäusestabilität durch eine geschwungene Form erhöht werden kann.

Die Falten seitens der Stirnkanten sind jeweils mittels zumindest einer Dichtmittelspur seitlich abgedichtet. Günstigerweise kann dafür ein Schmelzkleber eingesetzt werden. Alternativ ist auch eine Abdichtung mit einem Seitenband denkbar. Für den Fall, dass ein oder mehrere Seitenbänder zur seitlichen Abdichtung verwendet werden, sind die Seitenbänder vorzugsweise aus einem flexiblen Vliestreifen gebildet, der insbesondere mit der zugeordneten Stirnkante verklebt ist. Der Einsatz des Schmelzklebers stellt jedoch eine bevorzugte kostengünstige Möglichkeit dar, die zudem den Vorteil möglichst hoher Flexibilität und Gestaltungsfreiheit aufweist.

In einer nicht beanspruchten Ausgestaltung kann zwischen dem ersten und dem zweiten Elementabschnitt ein weiterer Elementabschnitt angeordnet sein, wobei an einer oder beiden einander gegenüberliegenden Stirnkantenflächen des weiteren Elementabschnitts die Richtungsänderung erfolgt. So kann beispielsweise eine Stirnkantenflächen als ebene Fläche weitergeführt sein, während die gegenüberliegende Stirnkantenfläche unter einem Winkel, der auch kleiner als 180° sein kann, weitergeführt wird, bis die Stirnkantenfläche dann auf eine Stirnkantenfläche des zweiten Elementabschnitts trifft.

Erfindungsgemäß erfolgt die Richtungsänderung an einer Grenzfläche zwischen dem ersten Elementabschnitt und dem zweiten Elementabschnitt. Auf diese Weise können die Faltenkanten beispielsweise parallel weitergeführt sein, während die Stirnkantenflächen unter einem Winkel abknicken und ebenso im Wesentlichen parallel zueinander weiterlaufen. In einer anderen von den Ansprüchen nicht umfassten Ausführungsform können die beiden Stirnkantenflächen jedoch auch nicht parallel weitergeführt sein. Dadurch können Richtungsänderungen von Stirnkantenflächen sehr flexibel und modular gestaltet werden.

Weiter ausgeführt kann bei mehreren Elementabschnitten des Filterelements die Richtungsänderung an einer Grenzfläche zwischen dem ersten Elementabschnitt und dem weiteren Elementabschnitt und/oder an einer Grenzfläche zwischen dem weiteren Elementabschnitt und dem zweiten Elementabschnitt erfolgen. Dadurch ist es möglich, dass beispielsweise der erste und der zweite Elementabschnitt jeweils rechteckförmig, aber mit unterschiedlichen Längen der Falten ausgeführt sind, während der dazwischen angeordnete Elementabschnitt den Übergang der Stirnkantenflächen von dem ersten Elementabschnitt zu dem zweiten Elementabschnitt ausführt und die Richtungsänderung jeweils genau zwischen den Elementabschnitten ausgeführt wird.

In einer nicht beanspruchten Ausgestaltung kann die Richtungsänderung wenigstens einer Stirnkantenfläche einen Winkel kleiner als 180° aufweisen, gemessen zwischen den Stirnkantenflächen außerhalb des Filterbalgs. Auf diese Weise ist es möglich, beispielsweise von einem schmaleren Elementabschnitt auf einen breiteren Elementabschnitt überzugehen, oder auch einfach einen Elementabschnitt mit im Wesentlichen parallelen Stirnkantenflächen als Elementabschnitt mit ebenfalls im Wesentlichen parallelen, aber schräg weitergeführten Stirnkantenflächen fortzusetzen. So lassen sich auch nahezu rechteckförmige Elementabschnitte mit unterschiedlichen Tiefen aneinandersetzen oder weiterführen.

Alternativ dazu kann die Richtungsänderung auch an wenigstens einer Stirnkantenfläche einen konkav gekrümmten Abschnitt aufweisen, gesehen von außerhalb des Filterbalgs.

Damit lassen sich auch Elementabschnitte mit gekrümmten Stirnkantenflächen darstellen, die sehr flexibel sich an komplexere Bauraumvorgaben anpassen können. Beispielsweise können so günstig halbkreisförmige Grundrisse oder Aussparungen eines Filterelements umgesetzt werden. Auf diese Weise ist möglich, mit dem Filterelement ein Filtergehäuse, das aufgrund von Bauraumvorgaben mit komplexeren Aussparungen ausgestaltet ist, auch möglichst effektiv auszufüllen.

Ähnlich kann die Richtungsänderung an wenigstens einer Stirnkantenfläche einen konvex gekrümmten Abschnitt aufweisen, gesehen von außerhalb des Filterbalgs. Damit lassen sich, ebenso wie mit konkav gekrümmten Abschnitten, auch Elementabschnitte mit gekrümmten Stirnkantenflächen darstellen, die nach außen von einer ebenen Stirnkantenfläche abweichen und sich nach außen wölben. Dadurch können sie sehr flexibel an komplexere Bauraumvorgaben angepasst werden.

In einer weiteren nicht beanspruchten Ausgestaltung kann die Richtungsänderung an wenigstens einer Stirnkantenfläche aufeinanderfolgend gegenläufig gekrümmte Abschnitte aufweisen, also einen konvex gekrümmten Abschnitt gefolgt von einem konkav gekrümmten Abschnitt, gesehen von außerhalb des Filterbalgs. Auf diese Weise ist es möglich, einen kontinuierlich gekrümmten Verlauf in einer Stirnkantenfläche eines Filterelements darzustellen und so an konstruktiv günstig gestaltete Filtergehäusedimensionen anzupassen.

In günstiger Ausgestaltung kann ein kontinuierlicher Übergang einer Stirnkantenfläche eines Elementabschnitts über eine Stirnkantenfläche eines anschließenden Elementabschnitts zu einer Stirnkantenfläche eines anschließenden Elementabschnitts ausgebildet sein. So können Filterelemente hergestellt werden, die keine Ecken oder Kanten im Verlauf der Stirnkantenflächen aufweisen.

Vorteilhaft kann am Umfang des Filterbalgs eine umlaufende Dichtung vorgesehen sein. Dadurch ist eine effektive Abdichtung des Filterelements beim Einbau in ein Filtergehäuse und somit die Trennung zwischen einer Rohfluidseite und einer Reinfluidseite möglich. Die Effektivität eines Filtersystems hängt im Wesentlichen von einer zuverlässigen Trennung von Rohfluidseite von der Reinfluidseite ab. Vor allem muss die Abdichtung unter den unterschiedlichsten Umweltbedingungen beim Einsatz in einem Kraftfahrzeug funktionieren, was große Temperaturunterschiede, Feuchtigkeit, Vibrationen und dergleichen umfasst. Leckagen des Filtersystems zwischen der Rohfluidseite und der Reinfluidseite lassen sich so mit ziemlicher Sicherheit vermeiden.

Ganz besonders vorteilhaft kann deshalb als umlaufende Dichtung eine an den Filterbalg deckungsgleich angeschäumte Dichtung vorgesehen sein. Damit ist es möglich, eine möglichst feste Verbindung zwischen dem Filterbalg und der Dichtung darzustellen, die auch im Wesentlichen dauerhaft dicht ist und so die Effektivität des Filtersystems zumindest über die Standzeit des Filterelements gewährleistet. Als Werkstoff für die angeschäumte Dichtung kommen beispielsweise Polyurethanschäume in Betracht, die eine sehr flexible Formgestaltung und andererseits eine feste und dauerhafte Verbindung erlauben. Auch sind die Verarbeitungsprozesse so gestaltbar, dass herkömmliche Filtermedien damit verträglich umschäumt werden können und nicht an den Schnittstellen zwischen Kunststoff und Filtermedium Degradationen auftreten können. Auf diese Weise können auch große Gestaltungsmöglichkeiten der Form des Filterelements erreicht werden.

Gemäß einer vorteilhaften Ausgestaltung kann die umlaufende Dichtung an Stirnkanten und Seitenkanten angeordnet sein. Auf diese Weise ist es möglich, das Filterelement in das Gehäuseunterteil eines Filtergehäuses einzusetzen, so dass die Oberseite des Filterelements mit einer Gehäusekante abschließt und das Gehäuseoberteil darauf aufgesetzt werden kann. So kann die Rohfluidseite des Filterelements günstig von der Reinfluidseite des Filterelements abgedichtet werden. Auch bei einem Wechsel des Filterelements ist so eine Verschmutzung der Reinseite des Filtersystems vermeidbar.

In einer vorteilhaften Ausgestaltung kann am Umfang des Filterbalgs eine umlaufende Dichtung vorgesehen sein, deren mittlere Breite im Bereich der konvex und/oder konkav gekrümmten Abschnitte der Stirnkantenflächen breiter ist als außerhalb der Abschnitte. Dadurch lassen sich Werkzeuge zum Herstellen der umlaufenden Dichtung durch Anspritzen an den Filterbalg günstig gestalten und können so kostengünstig gefertigt werden. Damit lassen sich die gesamten Herstellkosten eines Filterelements reduzieren.

In einer zweckmäßigen Ausgestaltung kann der Filterbalg wenigstens drei Elementabschnitte aufweisen, wobei der mittlere Elementabschnitt jeweils auf gegenüberliegenden Stirnseiten im Wesentlichen parallel zueinander verlaufende Stirnkantenflächen aufweist. Auf diese Weise lassen sich günstig Filterelemente mit stufenförmig gestaltetem Grundriss darstellen, die dann ggf. auch noch miteinander geschachtelt werden können, um so einen komplexen Bauraum möglichst günstig auszufüllen. Auch sind dadurch günstige Strömungsverhältnisse erreichbar, da der Strömungsquerschnitt auf diese Weise über die Querschnittsfläche des Filterelements möglichst homogen gestaltbar ist.

Gemäß einer nicht beanspruchten Ausgestaltung kann der Filterbalg wenigstens drei Elementabschnitte aufweisen, wobei der mittlere Elementabschnitt wenigstens einen konkav gekrümmten Abschnitt anschließend an einen konvex gekrümmten Abschnitt an wenigstens einer der Stirnkantenflächen aufweist. Auf diese Weise ist es möglich, einen kontinuierlichen Verlauf in einer gekrümmten Stirnkantenfläche eines Filterelements darzustellen und so an konstruktiv günstig gestaltete Filtergehäusedimensionen anzupassen.

Gemäß einer weiteren vorteilhaften Ausgestaltung kann ein Versteifungssteg quer zu den Falten so angeordnet sein, dass die Faltkanten durch den Versteifungssteg fixiert sind. Dadurch erfahren die Falten des Filtermediums eine zu einer Stirnkantenabdichtung beispielsweise durch ein Band oder eine Verklebung zusätzliche Abstützung, welche den Filterbalg insgesamt mechanisch stabilisiert und so auch gegen einen Strömungsdruck des zu filternden Fluids abstützt. So kann die Lebensdauer des Filterelements günstig erhöht werden.

Gemäß einer vorteilhaften Ausgestaltung können die Falten eine voneinander verschiedene Faltenhöhe aufweisen, insbesondere eine von einer Seitenkante zu einer anderen Seitenkante des Filterbalgs sich kontinuierlich verändernde Faltenhöhe aufweisen. Im Speziellen kann die Faltenhöhe von einem Ende des Filterbalgs zu einem anderen Ende des Filterbalgs zunehmen oder abnehmen, so dass eine keilartige Form der Höhe des Filterbalgs darstellbar ist, was für bestimmte Einbauanforderungen in Kraftfahrzeugen sich als günstig erweisen kann.

Vorteilhaft kann als Filtermedium Cellulose eingesetzt werden. Als Filtermedien werden günstigerweise Vliese eingesetzt. Cellulose ist dafür sehr flexibel einsetzbar und auch aus Umweltgesichtspunkten durch die leichte Abbaubarkeit von großem Vorteil.

Nach einem weiteren Aspekt betrifft die Erfindung eine Anordnung aus wenigstens zwei Filterelementen, wobei zwei komplementär angeordnete Filterbälge mit ihren komplementären Stirnkantenflächen so aneinander angrenzend zusammengesetzt sind, dass sie fluiddicht aneinander anschließen. Auf diese Weise ist es möglich, ein größeres Filtersystem durch zwei Filterelemente abzudecken. Auch lassen sich so rechteckförmige Außengeometrien eines Filtersystems damit realisieren, obwohl die Filterelemente an sich kontinuierliche verlaufende, konkav und/oder konvex gekrümmte Stirnkantengeometrien aufweisen.

Gemäß einer nicht beanspruchten Ausgestaltung kann der Filterbalg wenigstens drei Elementabschnitte aufweisen, wobei der mittlere Elementabschnitt wenigstens einen konkav gekrümmten Abschnitt anschließend an einen konvex gekrümmten Abschnitt an wenigstens einer der Stirnkantenflächen aufweist, und wobei die wenigstens zwei Filterelemente über die mittleren Elementabschnitte fluiddicht aneinander anschließbar ausgebildet sind. So lässt sich eine reckteckförmige Außengeometrie eines Filterelements durch komplementären Zusammenschluss zweier Filterbälge realisieren, obwohl die Filterbälge an sich kontinuierliche verlaufende, konkav und/oder konvex gekrümmte Stirnkantengeometrien aufweisen.

Nach einem weiteren Aspekt betrifft die Erfindung ein Filtersystem mit einem Filterelement, wobei das Filterelement austauschbar in einem Filtergehäuse angeordnet ist, das wenigstens ein Gehäuseunterteil und ein Gehäuseoberteil umfasst, welche lösbar fluiddicht verbunden sind, und wobei das Filterelement eine Rohseite von einer Reinseite des Filtersystems fluiddicht trennt. Auf diese Weise ist es möglich, das Filterelement in das Gehäuseunterteil des Filtergehäuses einzusetzen, so dass die Oberseite des Filterelements mit einer Gehäusekante abschließt und das Gehäuseoberteil darauf aufgesetzt werden kann. So kann die Rohfluidseite des Filterelements günstig von der Reinfluidseite des Filterelements abgedichtet werden. Das Filterelement ist so bei Beladung mit Schmutz leicht austauschbar. Auch ist bei einem Wechsel des Filterelements mit einer solchen Anordnung eine Verschmutzung der Reinseite des Filtersystems vermeidbar. Nach einem weiteren Aspekt betrifft die Erfindung die Verwendung des Filtersystems als Flachluftfilter, insbesondere als Flachluftfilter einer Brennkraftmaschine. Denkbar ist auch die Verwendung für andere strömende Medien, wie etwa Öl, Kraftstoff, Harnstoff und dergleichen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht auf einen Filterbalg in einer nicht beanspruchten Ausführungsform mit drei Elementabschnitten;
- Fig. 2: eine Draufsicht auf einen Filterbalg nach einem Ausführungsbeispiel der Erfindung mit zwei Elementabschnitten;
- Fig. 3: eine isometrische Darstellung des Filterbalg aus Figur 2 mit zwei Elementabschnitten;
- Fig. 4: eine Draufsicht auf einen Filterbalg nach einer nicht beanspruchten Ausführungsform mit einer konkaven Richtungsänderung einer Stirnkantenfläche;
- Fig. 5: eine isometrische Darstellung eines Filterelements nach einem weiteren Ausführungsbeispiel der Erfindung mit einer Reihe gestufter Filterbälge;
- Fig. 6: eine Draufsicht auf ein abgewickeltes Filtermedium in einer nicht beanspruchten Ausführungsform mit aufgetragener Dichtmittelspur zum Abdichten der Stirnkanten;
- Fig. 7: eine isometrische Darstellung eines Filterelements, gebildet aus dem in Figur 6 dargestellten Filtermedium;

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

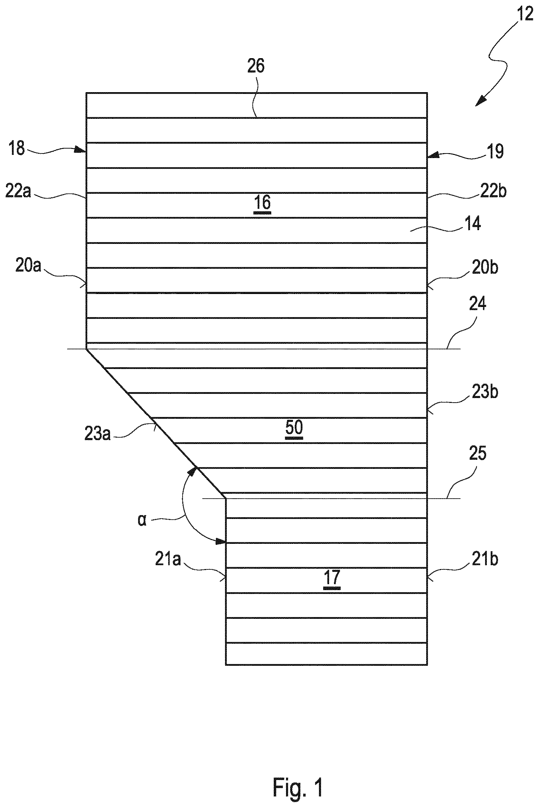

Figur 1 zeigt eine Draufsicht auf einen Filterbalg 12 in einer von den vorliegenden Ansprüchen nicht umfassten Ausgestaltung mit drei Elementabschnitten 16, 50, 17. Der Filterbalg 12, wie auch die nachfolgend beschriebenen Filterbälge, sind aus einer zusammenhängenden Filtermedienbahn gefertigt. Dabei ist zwischen dem ersten und dem zweiten Elementabschnitt 16, 17 ein weiterer Elementabschnitt 50 angeordnet, wobei an einer oder beiden einander gegenüberliegenden Stirnkantenflächen 23a, 23b des weiteren Elementabschnitts 50 die Richtungsänderung erfolgt. Die Richtungsänderung erfolgt dabei an einer Grenzfläche 24 zwischen dem ersten Elementabschnitt 16 und dem weiteren Elementabschnitt 50 und an einer Grenzfläche 25 zwischen dem weiteren Elementabschnitt 50 und dem zweiten Elementabschnitt 17. Die Richtungsänderung weist an dem Übergang von der Stirnkantenfläche 23a zu der Stirnkantenfläche 21a einen Winkel α kleiner als 180° auf, gemessen zwischen den Stirnkantenflächen 23a und 21a außerhalb des Filterbalgs 12. Die Stirnkantenfläche 23b wird dagegen in einer Richtung von der Stirnkantenfläche 20b zu der Stirnkantenfläche 21b weitergeführt. Die Faltenkanten 26 des Filtermediums 14 verlaufen parallel über alle drei Elementabschnitte 16, 50, 17.

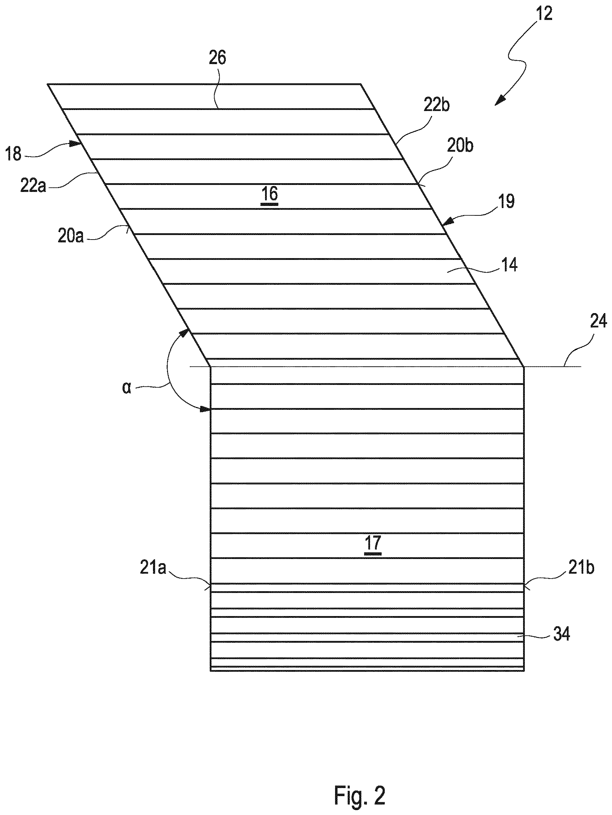

In Figur 2 ist eine Draufsicht auf einen Filterbalg 12 nach einem Ausführungsbeispiel der Erfindung mit zwei Elementabschnitten 16, 17 dargestellt. Die Richtungsänderung der Stirnkantenflächen 20a nach 21a in der Stirnfläche 18 bzw. der Stirnkantenflächen 20b nach 21b in der Stirnfläche 19 erfolgt dabei an einer Grenzfläche 24 zwischen dem ersten Elementabschnitt 16 und dem zweiten Elementabschnitt 17. Im unteren Teil des Elementabschnitts 17 sind die aufgestellten Falten 34 des Filtermediums 14 zu sehen, um übrigen Bereich sind lediglich die Faltenkanten 26 dargestellt.

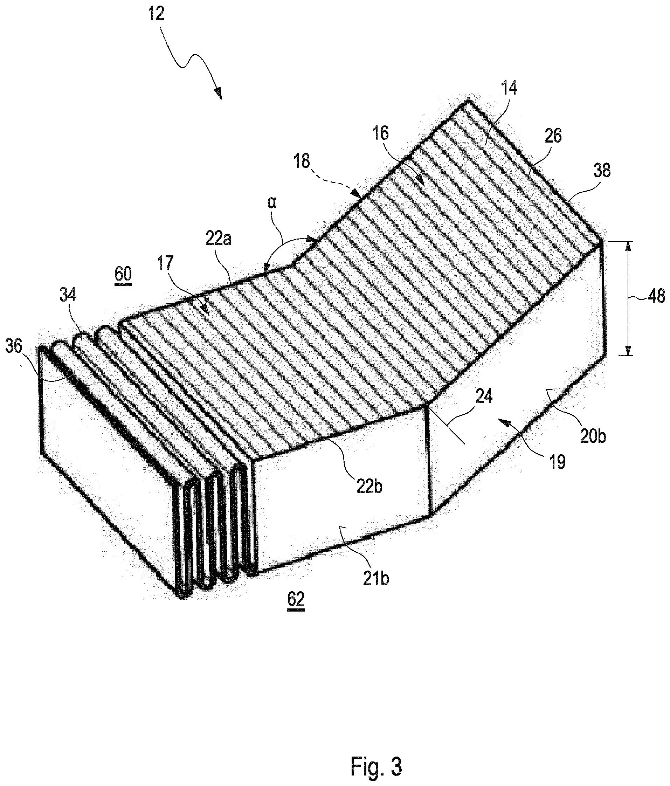

Figur 3 zeigt dazu eine isometrische Darstellung des Filterbalgs 12 aus Figur 2 mit zwei Elementabschnitten 16, 17. Im linken Teil des Elementabschnitts 17 sind die aufgestellten Falten 34 des Filtermediums 14 zu sehen, im übrigen Bereich sind lediglich die Faltenkanten 26 rein schematisch dargestellt. Der Filterbalg 12 ist ebenfalls rein schematisch dargestellt. In der Darstellung ist beispielsweise der Rohfluidbereich 60 von oben auf den Filterbalg 12 zu sehen, während der Reinfluidbereich 62 unterhalb des Filterbalgs 12 angeordnet ist. Die Falten 34 schließen an beiden Enden des Filterbalgs 12 mit den Seitenkanten 36 und 38 ab. Die Falten 34 weisen eine gleiche Faltenhöhe 48 auf.

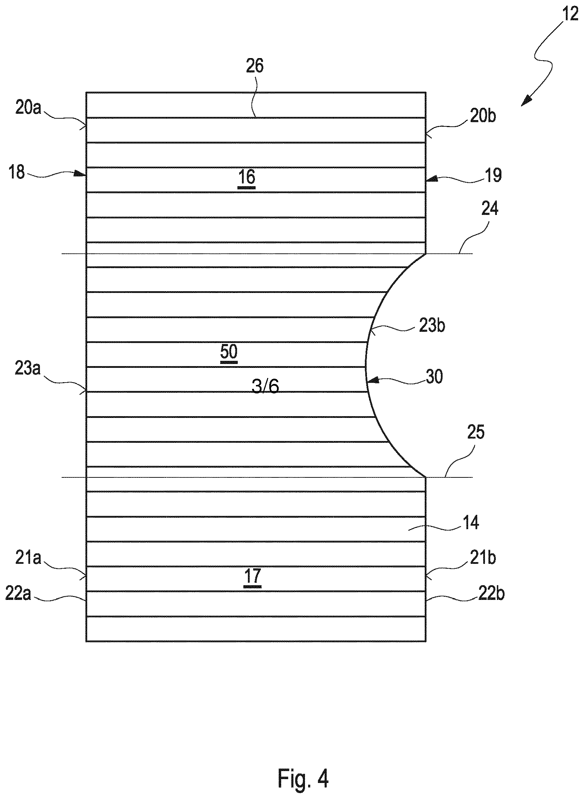

In Figur 4 ist eine Draufsicht auf einen Filterbalg 12 in einer von den vorliegenden Ansprüchen nicht umfassten Ausgestaltung mit einer konkaven Richtungsänderung einer Stirnkantenfläche 23b in der Stirnfläche 19 dargestellt, gesehen von außerhalb des Filterbalgs 12, so dass ein konkav gekrümmter Abschnitt 30 der Stirnkantenfläche 23b in dem Elementabschnitt 50 ausgebildet ist. Eine solche Richtungsänderung ist beispielsweise typischerweise nötig, wenn das Filtergehäuse an dieser Stelle Aussparungen aufgrund von Bauraumvorgaben aufweist und das Filterelement 10 den zur Verfügung gestellten Bauraum möglichst günstig ausnutzen soll.

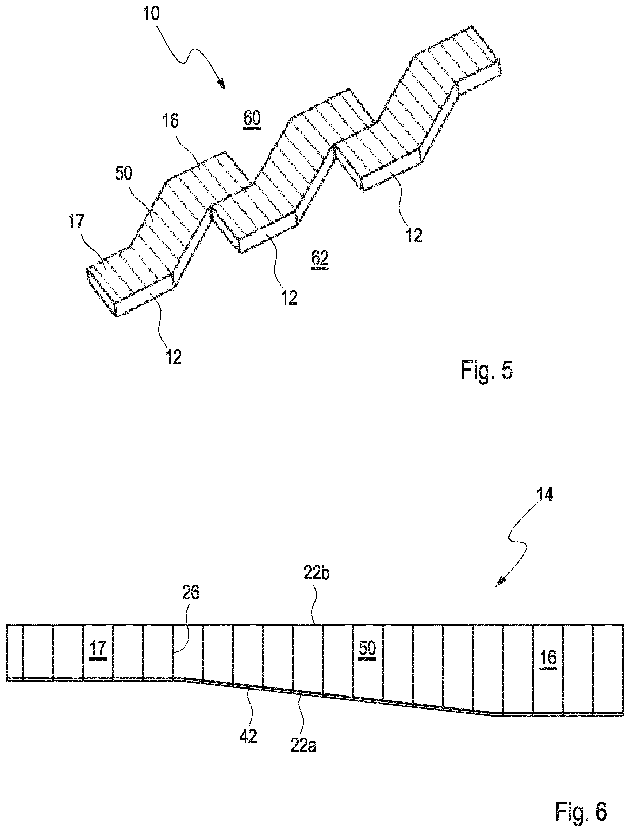

In Figur 5 ist eine isometrische Darstellung eines Filterelements 10 nach einem weiteren Ausführungsbeispiel der Erfindung mit einer Reihe einzelner Filterbälge 12 zu sehen. Ein einzelner Filterbalg 12 weist dabei drei Elementabschnitte 16, 17, 50 auf, wobei der mittlere Elementabschnitt 50 jeweils auf gegenüberliegenden Stirnseiten 18, 19 im Wesentlichen parallel zueinander verlaufende Stirnkantenflächen 20a, 20b und 21a, 21b aufweist. Die einzelnen Filterbälge 12 sind stufenförmig aneinandergesetzt, um so ein Filterelement 10 mit einer komplex gestalteten Außenkontur zu realisieren.

Figur 6 zeigt weiter eine Draufsicht auf ein abgewickeltes Filtermedium 14 in einer von den vorliegenden Ansprüchen nicht umfassten Ausgestaltung mit aufgetragener Dichtmittelspur 42 zum Abdichten der Stirnkanten 22a. Die einzelnen Faltenkanten 26 bei auseinandergezogenen Falten 34 sind parallel ausgerichtet, während die einzelnen Elementabschnitte 16, 50, 17 unterschiedlichen Breiten aufweisen und die Stirnkanten 22a eine Richtungsänderung beim Übergang von dem Elementabschnitt 16 zu dem Elementabschnitt 50 zu dem Elementabschnitt 17 aufweisen. Die Stirnkante 22b dagegen läuft in einer Geraden über alle drei Elementabschnitte 16, 50, 17 durch. Die Dichtmittelspur 42 zum Verkleben und Abdichten der Stirnkanten 22a, 22b ist unmittelbar benachbart an den Stirnkanten 22a, 22b aufgetragen.

Vorteilhaft kann als Filtermedium 14 Cellulose eingesetzt werden. Als Filtermedien 14 werden günstigerweise Vliese eingesetzt. Cellulose ist dafür sehr flexibel einsetzbar und auch aus Umweltgesichtspunkten durch die leichte Abbaubarkeit von großem Vorteil.

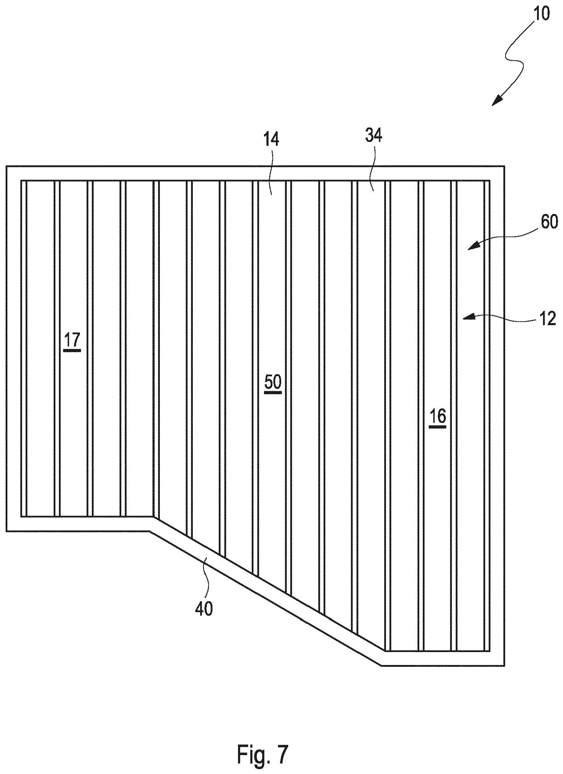

Figur 7 zeigt eine isometrische Darstellung eines Filterelements 10, gebildet aus dem in Figur 6 dargestellten Filtermedium 14. Das Filterelement 10 zum Filtern eines Fluids, insbesondere einer Brennkraftmaschine, insbesondere eines Kraftfahrzeugs, mit einem Filterbalg 12 aus einem Filtermedium 14, das entlang von Faltkanten 26 zickzackförmig zu Falten 34 gefaltet ist, die sich jeweils zwischen gegenüberliegenden Stirnkanten 22a, 22b des Filterbalgs 12 erstrecken, wobei die Falten 34 seitens der Stirnkanten 22a, 22b jeweils mittels zumindest einer Dichtmittelspur 42 seitlich abgedichtet sind. Dabei umfasst das Filterelement einen ersten Elementabschnitt 16 und einen zweiten Elementabschnitt 17, sowie einen weiteren Elementabschnitt 50, die jeweils auf gegenüberliegenden Stirnseiten 18, 19 im Wesentlichen parallel zueinander verlaufende Stirnkantenflächen 20a, 20b und 21a, 21b, sowie 23a, 23b aufwiesen, wobei von einem Elementabschnitt 16, 17 zum anderen Elementabschnitt 17, 16 eine der Stirnkantenflächen 20a, 20b eine Richtungsänderung erfährt. Das Filtermedium 14 aus Figur 8 ist zusammengefaltet, die Stirnkanten 22a, 22b sind so verklebt und abgedichtet, dass ein Filterbalg 12 aus drei Elementabschnitten 16, 50, 17 gebildet wurde. Am Umfang des Filterbalgs 12 ist eine umlaufende Dichtung 40 vorgesehen, die schematisch eingezeichnet ist. Günstigerweise kann dafür eine an den Filterbalg 12 deckungsgleich angeschäumte Dichtung, beispielsweise aus Polyurethanschaum, eingesetzt werden.

Nicht dargestellt ist eine Draufsicht auf ein Filterelement 10 nach einem nicht beanspruchten Ausführungsbeispiel aus einem Filterbalg 12 mit drei Elementabschnitten 16, 50, 17, wobei der mittlere Elementabschnitt 50 eine konkav und konvex gekrümmte Stirnkantenfläche 23b aufweist. Die Richtungsänderung an der Stirnkantenfläche 23b weist aufeinanderfolgend einen konvex gekrümmten Abschnitt 32 und einen konkav gekrümmten Abschnitt 30 auf, gesehen von außerhalb des Filterbalgs 12. So ist ein kontinuierlicher Übergang der Stirnkantenfläche 20b des Elementabschnitts 16 über die Stirnkantenfläche 23b des anschließenden Elementabschnitts 50 zu der Stirnkantenfläche 21b des anschließenden Elementabschnitts 17 ausgebildet. Eine umlaufende Dichtung 40 ist an den Stirnkanten 22a, 22b und den Seitenkanten 36, 38 angeordnet vorgesehen ist, Die mittlere Breite 46 der am Umfang des Filterbalgs 12 umlaufenden Dichtung 40 ist im Bereich der konvex und/oder konkav gekrümmten Abschnitte 32, 30 der Stirnkantenflächen 23a, 23b breiter als außerhalb der Abschnitte 32, 30.

Ein Versteifungssteg 44 ist quer zu den Falten 34 so angeordnet, dass die Faltkanten 26 durch den Versteifungssteg 44 fixiert sind. Dadurch erfahren die Falten 34 des Filtermediums 14 eine zu einer Stirnkantenabdichtung beispielsweise durch ein Band oder eine Verklebung zusätzliche Abstützung, welche den Filterbalg 12 insgesamt mechanisch stabilisiert und so auch gegen einen Strömungsdruck des zu filternden Fluids abstützt. So kann die Lebensdauer des Filterelements 10 günstig erhöht werden.

Die Faltenhöhe 48 der Falten 34 des Filterbalgs 12 ist in dem Ausführungsbeispiel gleich für alle Falten 34. Alternativ ist es jedoch denkbar, dass die Falten 34 eine voneinander verschiedene Faltenhöhe 48, insbesondere eine von einer Seitenkante 36 zu einer anderen Seitenkante 38 sich kontinuierlich verändernde Faltenhöhe 48 aufweisen. Im Speziellen kann die Faltenhöhe 48 von einem Ende des Filterbalgs 12 zu einem anderen Ende des Filterbalgs 12 zunehmen oder abnehmen, so dass eine keilartige Form der Höhe des Filterbalgs 12 darstellbar ist, was sich für bestimmte Einbauanforderungen in Kraftfahrzeugen als günstig erweisen kann.

Nicht dargestellt ist ein Filterelement 10 nach einem anderen nicht beanspruchten Ausführungsbeispiel aus einem Filterbalg 12 mit drei Elementabschnitten 16, 50, 17, wobei der mittlere Elementabschnitt 50 eine konkav und konvex gekrümmte Stirnkantenfläche 23b aufweist. Auch in diesem Ausführungsbeispiel weist der Filterbalg 12 drei Elementabschnitte 16, 17, 50 auf, wobei der mittlere Elementabschnitt 50 einen konkav gekrümmten Abschnitt 30 anschließend an einen konvex gekrümmten Abschnitt 32 an der Stirnkantenfläche 23b aufweist. Ein Unterschied dieses Ausführungsbeispiels zu dem vorangehenden Ausführungsbeispiel besteht darin, dass die mittlere Breite 46 der am Umfang des Filterbalgs 12 umlaufenden Dichtung 40 im Bereich der konvex und/oder konkav gekrümmten Abschnitte 32, 30 der Stirnkantenflächen 23a, 23b an die Krümmung der Stirnkantenfläche 23b angepasst ist, so dass sie gleich der mittleren Breite der Dichtung 40 außerhalb der Abschnitte 32, 30 ist. Dadurch ist die effektive Fläche des Filterbalgs 12 etwas erhöht gegenüber der effektiven Fläche des Filterbalgs 12 des vorangehenden Ausführungsbeispiels.

Auch hier ist die Faltenhöhe 48 der Falten 34 des Filterbalgs 12 gleich für alle Falten 34.

Nicht dargestellt ist eine Anordnung 120 aus zwei Filterelementen 10, deren zwei komplementär angeordnete Filterbälge 12 mit ihren komplementären Stirnseiten 19, welche die gekrümmten Stirnkantenflächen 23b aufweisen, aneinander grenzend angeordnet sind. Die zwei Filterbälge weisen denselben Querschnitt auf. Die zwei Filterbälge 12 sind mit ihren komplementären Stirnseiten 19 so aneinander angrenzend zusammengesetzt, dass sie fluiddicht aneinander anschließen. Jeder der Filterbälge 12 weist drei Elementabschnitte 16, 17, 50 auf, wobei der mittlere Elementabschnitt 50 einen konkav gekrümmten Abschnitt 30 anschließend an einen konvex gekrümmten Abschnitt 32 an einer der Stirnkantenflächen 23b aufweist. Dadurch sind die zwei Filterelemente 10 über die mittleren Elementabschnitte 50 fluiddicht aneinander anschließbar ausgebildet. Auf diese Weise ist es möglich, ein größeres Filtersystem durch zwei Filterelemente 10 abzudecken. Auch lassen sich so rechteckförmige Außengeometrien eines Filtersystems damit abdecken, obwohl die Filterelemente 10 an sich kontinuierliche verlaufende, konkav und/ oder konvex gekrümmte Stirnkantengeometrien aufweisen.

Nicht dargestellt ist ein Filtersystem 100 nach einem Ausführungsbeispiel der Erfindung. Das Filtersystem 100 umfasst wenigstens ein Filterelement 10 in einem Filtergehäuse 102, das aus einem Gehäuseunterteil 104 und einem Gehäuseoberteil 106 besteht, welche fluiddicht miteinander verbunden, beispielsweise verschraubt sind. Das Filtergehäuse weist einen Einlass 108 und einen Auslass 109 für das zu filternde Fluid auf.

Das Filterelement 10 ist austauschbar in dem Filtergehäuse 102 angeordnet, das das Gehäuseunterteil 104 und das Gehäuseoberteil 106 umfasst, welche über eine Verschraubung lösbar, aber fluiddicht verbunden sind. Das Filterelement 100 trennt dabei die Rohseite 110 von der Reinseite 112 des Filtersystems fluiddicht. Das Filterelement 10 ist mit der umlaufenden Dichtung 40 an der Trennstelle zwischen Gehäuseunterteil 104 und Gehäuseoberteil 106 des Filtergehäuses 102 angeordnet und sitzt mit der Dichtung 40 auf dem Gehäuseunterteil 104 auf. Auf diese Weise kann mit der umlaufenden Dichtung des Filterelements 10 auch das Filtergehäuse 102 beim Aufsetzen des Gehäuseoberteils 106 auf das Gehäuseunterteil 104 abgedichtet werden.

## Patentansprüche

1. Filterelement (10) zum Filtern eines Fluids, insbesondere einer Brennkraftmaschine, insbesondere eines Kraftfahrzeugs, mit einem Filterbalg (12) aus einem Filtermedium (14), das entlang von Faltkanten (26) zickzackförmig zu geraden Falten (34) gefaltet ist, die sich jeweils zwischen gegenüberliegenden Stirnkanten (22a, 22b) des Filterbalgs (12) erstrecken, wobei die Falten (34) seitens der Stirnkanten (22a, 22b) jeweils, insbesondere mittels zumindest einer Dichtmittelspur (42) oder einem Seitenband, seitlich abgedichtet sind, wobei der Filterbalg (12) wenigstens einen ersten Elementabschnitt (16) und einen zweiten Elementabschnitt (17) umfasst, die jeweils auf gegenüberliegenden Stirnseiten (18, 19) im Wesentlichen parallel zueinander verlaufende Stirnkantenflächen (20a, 20b) und (21a, 21b) aufweisen, wobei von einem Elementabschnitt (16, 17) zum anderen Elementabschnitt (17, 16) die Stirnkantenflächen (20a, 20b) eine Richtungsänderung erfahren, wobei die Richtungsänderung der Stirnkantenflächen (20a, 20b) einen stumpfen Winkel (α) aufweist und die Faltenkanten parallel weitergeführt sind, während die Stirnkantenflächen unter einem Winkel abknicken und im Wesentlichen parallel zueinander weiterlaufen.

2. Filterelement nach Anspruch 1, wobei die Richtungsänderung an einer Grenzfläche (24) zwischen dem ersten Elementabschnitt (16) und dem zweiten Elementabschnitt (17) erfolgt.

3. Filterelement nach einem der vorhergehenden Ansprüche, wobei am Umfang des Filterbalgs (12) eine umlaufende Dichtung (40) vorgesehen ist.

4. Filterelement nach Anspruch 3, wobei als umlaufende Dichtung (40) eine an den Filterbalg (12) deckungsgleich angeschäumte Dichtung vorgesehen ist.

5. Filterelement nach Anspruch 3 oder 4, wobei die umlaufende Dichtung (40) an Stirnkanten (22a, 22b) und Seitenkanten (36, 38) angeordnet ist.

6. Filterelement nach einem der vorhergehenden Ansprüche, wobei der Filterbalg (12) wenigstens drei Elementabschnitte (16, 17, 50) aufweist, wobei der mittlere Elementabschnitt (50) jeweils auf gegenüberliegenden Stirnseiten (18, 19) im Wesentlichen parallel zueinander verlaufende Stirnkantenflächen (20a, 20b) und (21a, 21b) aufweist.

7. Filterelement nach einem der vorhergehenden Ansprüche, wobei ein Versteifungssteg (44) quer zu den Falten (34) so angeordnet ist, dass die Faltkanten (26) durch den Versteifungssteg (44) fixiert sind.

8. Filterelement nach einem der vorhergehenden Ansprüche, wobei die Falten (34) eine voneinander verschiedene Faltenhöhe (48) aufweisen, insbesondere eine von einer Seitenkante (36) zu einer anderen Seitenkante (38) des Filterbalgs (12) sich kontinuierlich verändernde Faltenhöhe (48) aufweisen.

9. Filterelement nach einem der vorhergehenden Ansprüche, wobei das Filtermedium (14) Cellulose aufweist.

10. Anordnung (120) aus wenigstens zwei Filterelementen (10) nach einem der vorhergehenden Ansprüche, wobei zwei komplementär angeordnete Filterbälge (12) mit ihren komplementären Stirnkantenflächen (20a, 20b, 21a, 21b, 23a, 23b) so aneinander angrenzend zusammengesetzt sind, dass sie fluiddicht aneinander anschließen.

11. Verwendung des Filterelements (10) nach einem der vorhergehenden Ansprüche als Flachluftfilter, insbesondere einer Brennkraftmaschine, insbesondere eines Kraftfahrzeugs.

12. Filtersystem (100) mit einem Filterelement (10) nach einem der Ansprüche 1 bis 9, wobei das Filterelement (10) austauschbar in einem Filtergehäuse (102) angeordnet ist, das wenigstens ein Gehäuseunterteil (104) und ein Gehäuseoberteil (106) umfasst, welche lösbar fluiddicht verbunden sind und wobei das Filterelement (100) eine Rohseite (110) von einer Reinseite (112) des Filtersystems fluiddicht trennt.

## Claims

1. Filter element (10) for filtering a fluid, in particular of an internal combustion engine, in particular of a motor vehicle, having a filter bellows (12) made of a filter medium (14) which is zigzag-folded along folding edges (26) to form straight folds (34) which extend each between opposite front edges (22a, 22b) of the filter bellows (12), wherein the folds (34) on the side of the front edges (22a, 22b) each are laterally sealed, in particular by means of at least one sealant track (42) or one lateral strip, wherein the filter bellows (12) comprises at least a first element portion (16) and a second element portion (17), which feature each front edge surfaces (20a, 20b) and (21a, 21b) running substantially parallel to one another on opposite front sides (18, 19), wherein the front edge surfaces (20a, 20b) undergo a directional change from one element portion (16, 17) to the other element portion (17, 16), wherein the directional change of the front edge surfaces (20a, 20b) features an obtuse angle (a) and the fold edges continue in parallel, while the front edge surfaces bend at an angle and continue substantially parallel to one another.

2. Filter element according to claim 1, wherein the directional change is realized at a boundary surface (24) between the first element portion (16) and the second element portion (17).

3. Filter element according to one of the preceding claims, wherein a circumferential seal (40) is provided at the circumference of the filter bellows (12).

4. Filter element according to claim 3, wherein a seal congruently foamed onto the filter bellows (12) is provided as a circumferential seal (40).

5. Filter element according to claim 3 or 4, wherein the circumferential seal (40) is disposed at the front edges (22a, 22b) and at the lateral edges (36, 38).

6. Filter element according to one of the preceding claims, wherein the filter bellows (12) features at least three element portions (16, 17, 50), wherein the central element portion (50) features respectively on opposite front sides (18, 19) front edge surfaces (20a, 20b) and (21a, 21b) substantially running parallel to each other.

7. Filter element according to one of the preceding claims, wherein a stiffening web (44) is disposed transversely to the folds (34) in such a way that the fold edges (26) are fixed by the stiffening web (44).

8. Filter element according to one of the preceding claims, wherein the folds (34) feature a fold height (48) different from each other, in particular a fold height (48) continuously changing from one lateral edge (36) to another lateral edge (38) of the filter bellows (12).

9. Filter element according to one of the preceding claims, wherein the filter medium (14) features cellulose.

10. Arrangement (120) of at least two filter elements (10) according to one of the preceding claims, wherein two complementarily disposed filter bellows (12) are assembled with their complementary front edge surfaces (20a, 20b, 21a, 21b, 23a, 23b) adjacent to one another in such way that they adjoin one another fluid-tightly.

11. Use of the filter element (10) according to one of the preceding claims as flat air filter, in particular of an internal combustion engine, in particular of a motor vehicle.

12. Filter system (100) having a filter element (10) according to one of the claims 1 to 9, wherein the filter element (10) is replaceably disposed in a filter housing (102) which comprises at least a housing lower part (104) and a housing upper part which are detachably connected in a fluid-tight manner and wherein the filter element (100) separates a raw side (110) from a clean side (112) of the filter system in a fluid-tight manner.

## Revendications

1. Elément filtrant (10) pour filtrer un fluide, en particulier d'un moteur à combustion interne, en particulier d'un véhicule automobile, avec un soufflet de filtre (12) constitué d'un milieu filtrant (14) plié en accordéon le long d'arêtes de pliage (26) pour former des plis droits (34) qui s'étendent respectivement entre des arêtes frontales opposées (22a, 22b) du soufflet de filtre (12), dans lequel les plis (34) du côté des arêtes frontales (22a, 22b) sont respectivement rendus étanches latéralement, en particulier au moyen d'une trace d'étanchéité (42), au moins au nombre d'une, ou d'une bande latérale, dans lequel le soufflet de filtre (12) comprend au moins une première section d'élément (16) et une seconde section d'élément (17), qui présentent respectivement sur des faces frontales opposées (18, 19) des surfaces d'arêtes frontales (20a, 20b) et (21a, 21b) essentiellement parallèles entre elles, dans lequel les surfaces d'arêtes frontales (20a, 20b) d'une section d'élément (16, 17) à l'autre section d'élément (17, 16) subissent un changement de direction, dans lequel le changement de direction des surfaces d'arêtes frontales (20a, 20b) présente un angle obtus (a) et les bords de pliage se poursuivent parallèlement, tandis que les surfaces d'arêtes frontales forment un angle et se poursuivent sensiblement parallèlement entre elles.

2. Élément filtrant selon la revendication 1, dans lequel le changement de direction a lieu au niveau d'une surface limite (24) entre la première section d'élément (16) et la seconde section d'élément (17).

3. Élément filtrant selon l'une des revendications précédentes, dans lequel un joint circonférentiel (40) est prévu à la circonférence du soufflet de filtre (12).

4. Elément filtrant selon la revendication 3, dans lequel un joint moussé de manière identique sur le soufflet de filtre (12) est prévu comme joint circonférentiel (40).

5. Élément filtrant selon la revendication 3 ou 4, dans lequel le joint circonférentiel (40) est disposé sur des arêtes frontales (22a, 22b) et des arêtes latérales (36, 38).

6. Elément filtrant selon l'une des revendications précédentes, dans lequel le soufflet de filtre (12) présente au moins trois sections d'élément (16, 17, 50), dans lequel la section d'élément centrale (50) présente des surfaces d'arêtes frontales (20a, 20b) et (21a, 21b) s'étendant sensiblement parallèlement les unes aux autres sur des faces frontales (18, 19) respectivement opposées.

7. Elément filtrant selon l'une des revendications précédentes, dans lequel une nervure de renforcement (44) est disposée transversalement aux plis (34) de telle sorte que les arêtes de pliage (26) sont fixées par la nervure de renforcement (44).

8. Elément filtrant selon l'une des revendications précédentes, dans lequel les plis (34) présentent une hauteur de plis (48) différente les unes des autres, en particulier une hauteur de plis (48) variant de manière continue d'une arête latérale (36) à une autre arête latérale (38) du soufflet de filtre (12).

9. Élément filtrant selon l'une des revendications précédentes, dans lequel le milieu filtrant (14) présente de la cellulose.

10. Agencement (120) d'éléments filtrants (10), au moins au nombre de deux, selon l'une des revendications précédentes, dans lequel deux soufflets de filtre (12) disposés de manière complémentaire sont assemblés avec leurs surfaces d'arêtes frontales complémentaires (20a, 20b, 21a, 21b, 23a, 23b) adjacentes l'une à l'autre de telle sorte qu'ils sont reliés entre eux de manière étanche aux fluides.

11. Utilisation d'un élément filtrant (10) selon l'une des revendications précédentes, en tant que filtre à air plat, en particulier d'un moteur à combustion interne, en particulier d'un véhicule automobile.

12. Système de filtre (100) avec un élément filtrant (10) selon l'une des revendications 1 à 9, dans lequel l'élément filtrant (10) est disposé de manière interchangeable dans un boîtier de filtre (102) comprenant au moins une partie inférieure de boîtier (104) et une partie supérieure de boîtier, qui sont reliées de manière amovible et étanche aux fluides, et dans lequel l'élément filtrant (100) sépare de manière étanche aux fluides un côté brut (110) d'un côté pur (112) du système de filtre.
